# EUROPEAN PATENT APPLICATION

(11) **EP 4 224 499 A1**
(43) Date of publication of application: **09.08.2023**
(21) Application number: 21875276.4
(22) Date of filing: 17.09.2021
(51) Int. Cl.: H01G 11/12, H01M 50/105, H01M 50/107, H01M 50/291, H01M 50/293, H01M 50/588

(54) **ELECTRIC POWER STORAGE MODULE**

(30) Priority: 30.09.2020 JP 2020164623
(71) Applicant: Panasonic Intellectual Property Management Co., Ltd., Osaka-shi, Osaka 540-6207 (JP)
(72) Inventor: NORIMINE, Shota, Osaka-shi, Osaka 540-6207 (JP); OGINO, Hirotaka, Osaka-shi, Osaka 540-6207 (JP)
(74) Representative: Novagraaf International SA
(86) International application number: PCT/JP2021/034225
(87) International publication number: WO 2022/070974

(57) **Abstract**

An electric power storage module includes an electric power storage device, a holder that holds the electric power storage device, and reinforcing members of the holder. The electric power storage device includes a plurality of cylindrical electrode assemblies, and a film outer covering body that includes a plurality of containers that individually wrap the plurality of electrode assemblies and a sealing part that seals the containers and connects the plurality of containers to each other. The holder includes a side plate extending in the array direction of the plurality of electrode assemblies, the side plate having a plurality of recesses arranged in the array direction and into which the respective containers are fitted. Each of the reinforcing members includes a first groove that extends in the array direction, is arranged together with the holder in an axial direction of the electrode assemblies, and into which the side plate is fitted on a surface facing the holder side.

## Description

### TECHNICAL FIELD

The present disclosure relates to an electric power storage module.

### BACKGROUND ART

In the related art, an electric power storage module on which a plurality of cylindrical electric power storage devices (for example, batteries) are mounted has been known (see, for example, PTL 1). In the electric power storage module disclosed in PTL 1, each electric power storage device has a cylindrical outer covering can, and a winding-type electrode assembly is contained in each outer covering can.

### Citation List

### Patent Literature

PTL 1: Unexamined Japanese Patent Publication No. 2014-170613

### SUMMARY OF THE INVENTION

### Technical problem

The electric power storage module may be used as a power source for a vehicle or a mobile terminal. Thus, it is desired to reduce a weight of the electric power storage module. As a method for reducing the weight of the electric power storage module, it is considered that a plurality of electrode assemblies are wrapped with a common film outer covering body while individual sealing properties are maintained. Accordingly, since the outer covering can which contains the electrode assemblies can be eliminated, the weight of the electric power storage module can be reduced. On the other hand, the electric power storage device having a structure in which the plurality of electrode assemblies are sealed with the film outer covering body is likely to be greatly deformed by an impact or the like due to high flexibility of the film outer covering body film outer covering body. Thus, it is desired to enhance holding strength of the electric power storage device.

The present disclosure has been made in view of such a situation, and an object of the present disclosure is to provide a technique for enhancing holding strength of an electric power storage device having a structure in which a plurality of electrode assemblies are sealed with a film outer covering body.

### Solution to problem

An aspect of the present disclosure is an electric power storage module. The electric power storage module includes an electric power storage device, a holder that holds the electric power storage device, and reinforcing members of the holder. The electric power storage device includes a plurality of cylindrical electrode assemblies, and a film outer covering body that includes a plurality of containers that individually wrap the plurality of electrode assemblies and a sealing part that seals the containers and connects the plurality of containers to each other. The holder includes a side plate extending in the array direction of the plurality of electrode assemblies, the side plate having a plurality of recesses arranged in the array direction and into which the respective containers are fitted. Each of the reinforcing members includes a first groove that extends in the array direction, is arranged together with the holder along an axis of the electrode assemblies, and into which the side plate is fitted on a surface facing the holder.

Any combination of the above constituent elements and modifications of what is described in the present disclosure in terms of method, device, system, and the like are also effective as aspects of the present disclosure. Advantageous effect of invention

According to the present disclosure, the holding strength of the electric power storage device having the structure in which the plurality of electrode assemblies are sealed with the film outer covering body be enhanced.

### BRIEF DESCRIPTION OF THE DRAWINGS

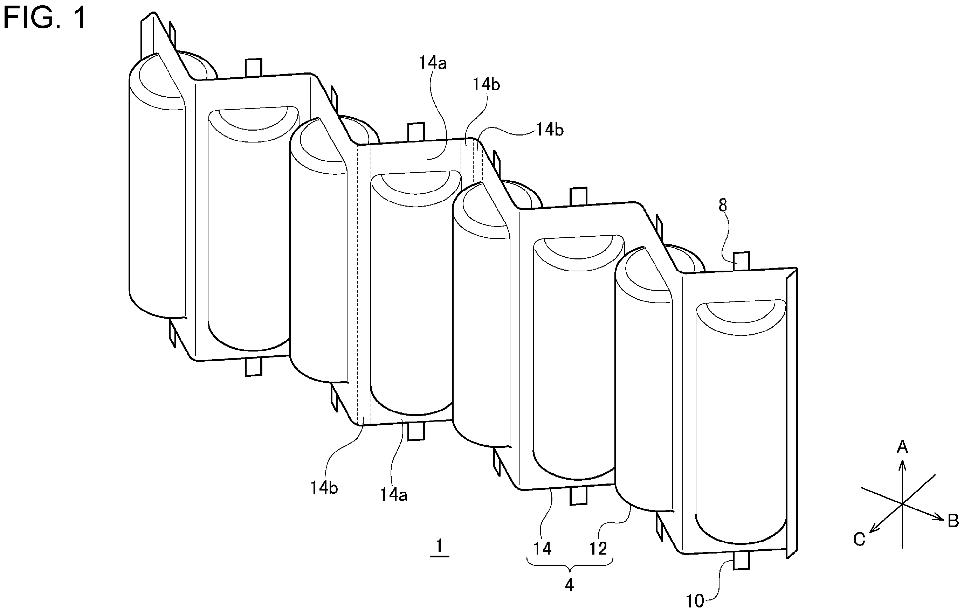

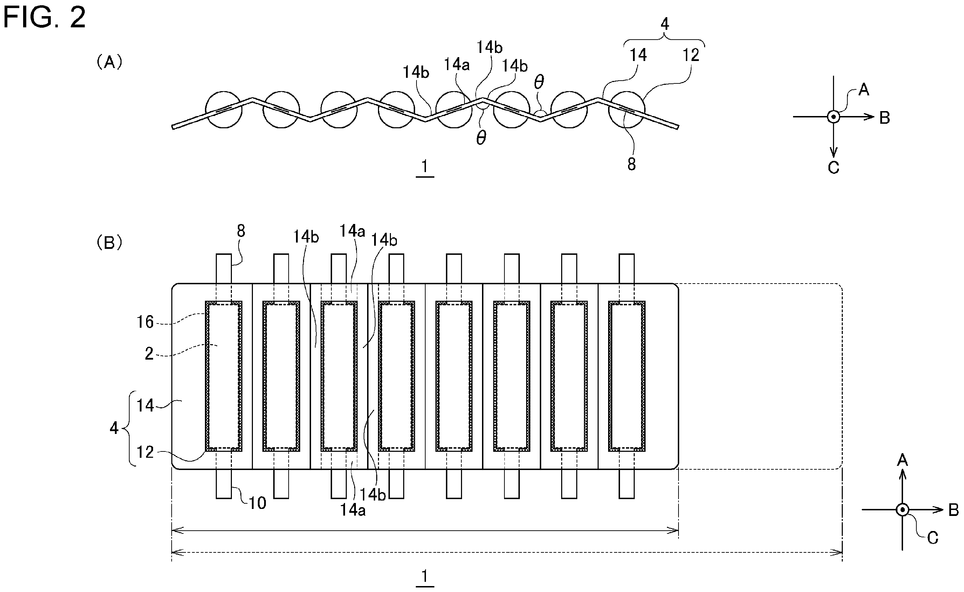

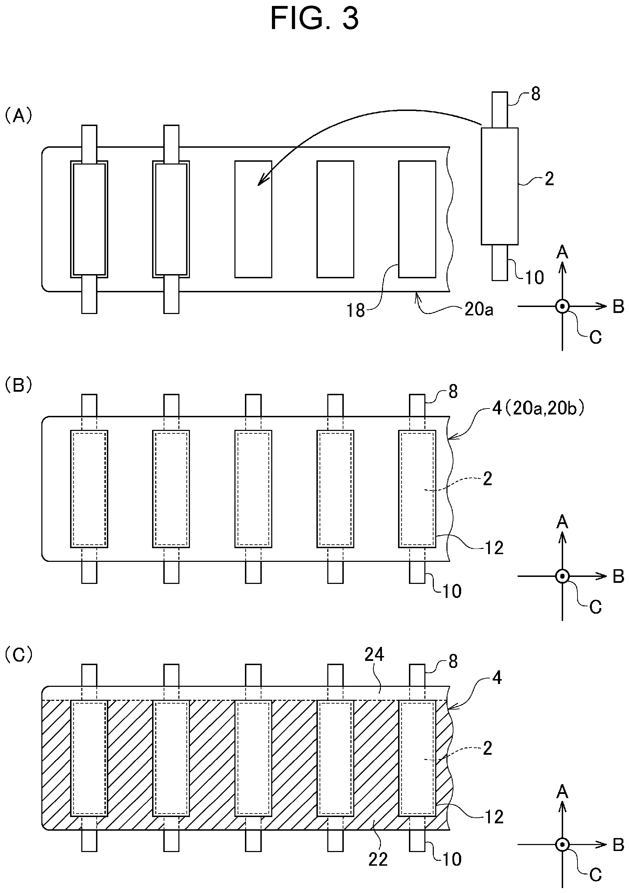

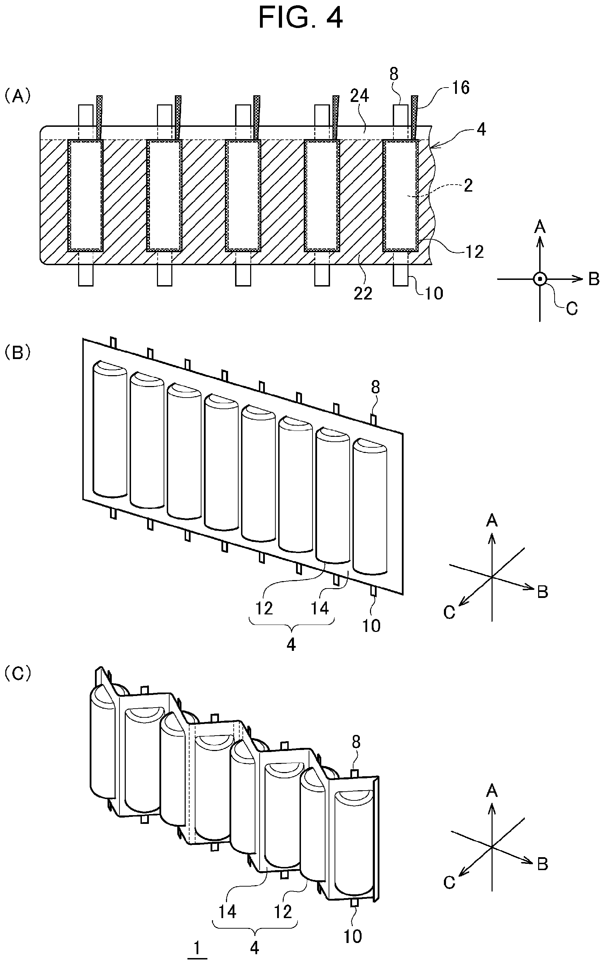

Fig. 1 is a perspective view of an electric power storage device provided in an electric power storage module according to an exemplary embodiment.
(A) of Fig. 2 is a schematic view of the electric power storage device as viewed along the axis. (B) of Fig. 2 is a schematic view of the electric power storage device as viewed in a second direction.
(A) of Fig. 3 to (C) of Fig. 3 are step diagrams of a method for manufacturing the electric power storage device.
(A) of Fig. 4 to (C) of Fig. 4 are step diagrams of the method for manufacturing the electric power storage device.
Fig. 5 is a perspective view of the electric power storage module according to the exemplary embodiment.
Fig. 6 is an exploded perspective view of the electric power storage module.
(A) of Fig. 7 is a plan view of a reinforcing member, and (B) of Fig. 7 is a perspective view of a holder.
Fig. 8 is a perspective view of a part of an electric power storage module according to a modified example.

### DESCRIPTION OF EMBODIMENT

Hereinafter, the present disclosure will be described on the basis of preferred exemplary embodiments with reference to the drawings. The exemplary embodiments are not intended to limit the present disclosure but are illustrative, and all features described in the exemplary embodiments and combinations of the features are not necessarily essential to the present disclosure. The identical or equivalent constituent elements, members, and treatments illustrated in the drawings are denoted by the identical reference marks, and repetitious description will be omitted when appropriate. The scale and the shape of each section illustrated in each drawing are set for the sake of convenience in order to facilitate the understanding of the description and should not be interpreted in a limited manner unless otherwise specified. In cases where terms such as "first" and "second" are used in the present description or claims, these terms do not represent any order or importance but are intended to distinguish one configuration from another configuration, unless otherwise specified. From each of the drawings, a part of members not important for describing the exemplary embodiments are omitted.

Fig. 1 is a perspective view of electric power storage device 1 provided in electric power storage module 100 according to the exemplary embodiment. (A) of Fig. 2 is a schematic view of electric power storage device 1 as viewed in axial direction A. (B) of Fig. 2 is a schematic view of electric power storage device 1 as viewed in second direction C. In (B) of Fig. 2, an inside of film outer covering body 4 is also illustrated for the sake of convenience in description. A state before film outer covering body 4 is folded is illustrated by a broken line. In the present exemplary embodiment, a direction in which a spiral axis of electrode assembly 2 extends is defined as axial direction A, an array direction of the plurality of electrode assemblies 2 is defined as first direction B, and a direction orthogonal to axial direction A and first direction B is defined as second direction C.

Electric power storage device 1 of the present exemplary embodiment is, for example, a rechargeable secondary battery such as a lithium ion battery, a nickel-hydrogen battery, or a nickel-cadmium battery, or a capacitor such as an electric double layer capacitor. Electric power storage device 1 includes the plurality of electrode assemblies 2 and film outer covering body 4. Although electric power storage device 1 of the present exemplary embodiment includes eight electrode assemblies 2, the number of electrode assemblies 2 is not particularly limited and may be two or more.

Each electrode assembly 2 has a cylindrical shape, and has a wound structure in which a strip-shaped first electrode plate and a strip-shaped second electrode plate are stacked with an inter-electrode separator interposed therebetween and are spirally wound. As an example, the first electrode plate is a negative-electrode plate, and the second electrode plate is a positive-electrode plate. First electrode lead 8 is electrically connected to the first electrode plate. Second electrode lead 10 is electrically connected to the second electrode plate. For example, first electrode lead 8 and second electrode lead 10 have a strip shape, and one end thereof is welded to each electrode plate. The directions of the axes of the plurality of electrode assemblies 2 are set such that axial directions a of electrode assemblies 2 are parallel to each other, and the plurality of electrode assemblies are arrayed in first direction B at predetermined intervals. The plurality of electrode assemblies 2 are wrapped in common film outer covering body 4.

Film outer covering body 4 has, for example, a structure in which two laminate films are stacked. Each laminate film has a structure in which thermoplastic resin sheets are stacked on both surfaces of a metal sheet such as aluminum. Film outer covering body 4 includes a plurality of containers 12 and a sealing part 14. The plurality of containers 12 are arrayed in first direction B at predetermined intervals. Each container 12 has a cylindrical shape, and individually encloses and contains each electrode assembly 2. Each container 12 is formed of a bag provided in film outer covering body 4. The bag is a part separated from each other in two laminate films. Accordingly, each container 12 projects from sealing part 14 along a shape of a side surface of electrode assembly 2. Electrolytic solution 16 is contained in each container 12 together with electrode assembly 2.

Sealing part 14 surrounds an outer periphery of each container 12 to seal each container 12. Sealing part 14 is formed of, for example, a welded part of a thermoplastic resin sheet. The welded part is obtained by performing a thermocompression bonding treatment on an outer periphery of the bag of film outer covering body 4 and welding the thermoplastic resin sheets of two laminate films to each other. Sealing part 14 seals containers 12 and connects the plurality of containers 12 to each other.

Ends of first electrode lead 8 and second electrode lead 10 on a side opposite to a side connected to electrode assembly 2 project toward an outside of film outer covering body 4. An interface between each electrode lead and film outer covering body 4 is sealed with a known sealant. In the present exemplary embodiment, first electrode lead 8 and second electrode lead 10 connected to each electrode assembly 2 project toward opposite sides in axial direction A. First electrode leads 8 project toward the same side. First electrode lead 8 and second electrode lead 10 may project toward the same side in axial direction A.

Film outer covering body 4 extends in a zigzag manner while being refracted or curved between adjacent containers 12. Film outer covering body 4 is folded in a zigzag manner, and thus, an interval between containers 12 in first direction B can be narrowed compared to a state before the film outer covering body is folded. Accordingly, a length of electric power storage device 1 in first direction B can be shortened. The plurality of containers 12 of the present exemplary embodiment are disposed such that centers thereof are disposed on the same straight line as viewed in axial direction A in a state where film outer covering body 4 extends in a zigzag manner. Accordingly, it is possible to suppress an increase in dimension of electric power storage device 1 in second direction C as compared with a case where the plurality of containers 12 are disposed such that the centers thereof are shifted in second direction C. Sealing part 14 bent in a zigzag shape is accommodated inside container 12 in second direction C. Accordingly, it is possible to suppress an increase in dimension of electric power storage device 1 in second direction C caused by folding of film outer covering body 4. In the present disclosure, the centers of the plurality of containers 12 are not necessarily positioned on the same straight line.

Sealing part 14 includes a pair of first sides 14a and a pair of second sides 14b surrounding the periphery of each container 12. The pair of first sides 14a is arranged in axial direction A with each container 12 interposed therebetween, and seals an end of each container 12 in axial direction A. First sides 14a of the present exemplary embodiment extend linearly through the center of container 12 as viewed in axial direction A. The pair of second sides 14b is arranged in a direction orthogonal to axial direction A with each container 12 interposed therebetween, and extends in axial direction A to connect the pair of first sides 14a.

Two second sides 14b positioned between two adjacent containers 12 are connected to each other at predetermined angle θ, that is, non-linearly. Directions in which connecting parts of two second sides 14b are refracted or curved are alternately different in a plurality of connecting parts arranged in first direction B. As a result, film outer covering body 4 extends in a zigzag manner in first direction B.

Hereinafter, an example of a method for manufacturing electric power storage device 1 will be described. (A) of Fig. 3 to (C) of Fig. 3 and (A) of Fig. 4 to (C) of Fig. 4 are step diagrams of a method for manufacturing electric power storage device 1. First, as illustrated in (A) of Fig. 3, first laminate film 20a is prepared. A plurality of depressions 18 having a semi-circular columnar shape are formed in advance in first laminate film 20a. The plurality of depressions 18 are formed, for example, by performing a known treatment such as press working on first laminate film 20a. Electrode assembly 2 is mounted in each depression 18. First electrode lead 8 and second electrode lead 10 are connected to electrode assembly 2 in advance. A sealant (not illustrated) is provided in first electrode lead 8 and second electrode lead 10.

Subsequently, as illustrated in (B) of Fig. 3, second laminate film 20b is overlapped on first laminate film 20a to form film outer covering body 4. Depression 18 having a semi-circular columnar shape is provided in second laminate film 20b at a position facing each depression 18 of first laminate film 20a. Thus, first laminate film 20a and second laminate film 20b are overlapped with each other, and thus, a bag, in other words, container 12 is formed by the pair of depressions 18. A method for forming depression 18 in second laminate film 20b is the same as the method for forming depression 18 in first laminate film 20a. In a state where electrode assembly 2 is contained in container 12, a distal end of first electrode lead 8 and a distal end of second electrode lead 10 project toward the outside of film outer covering body 4.

Subsequently, as illustrated in (C) of Fig. 3, a thermocompression bonding treatment is performed on a part of film outer covering body 4 to form welded part 22. A part of film outer covering body 4 on which a thermocompression bonding treatment is not performed is non-welded part 24. Non-welded part 24 is disposed to connect each container 12 and the outside of film outer covering body 4. In the present exemplary embodiment, non-welded part 24 is provided to connect a side from which first electrode lead 8 projects among four sides of each container 12 and the outside of film outer covering body 4. The remaining three sides of each container 12 are surrounded by welded part 22. An interface between film outer covering body 4 and second electrode lead 10 is sealed with a sealant.

Subsequently, as illustrated in (A) of Fig. 4, electrolytic solution 16 is injected into each container 12 via non-welded part 24. After the injection of electrolytic solution 16, as illustrated in (B) of Fig. 4, a thermocompression bonding treatment is performed on non-welded part 24. As a result, sealing part 14 surrounding the entire periphery of each container 12 is formed. An interface between film outer covering body 4 and first electrode lead 8 is sealed with a sealant. Subsequently, as illustrated in (C) of Fig. 4, film outer covering body 4 is bent in a zigzag manner. Through the above steps, electric power storage device 1 is obtained.

The method for manufacturing electric power storage device 1 is not limited to the method described above. For example, each electrode assembly 2 may be wrapped by using one laminate film having a length twice as long as the length of electric power storage device 1 and folding the laminate film in half. When the required amount of electrolytic solution 16 is small, the step of injecting electrolytic solution 16 illustrated in (A) of Fig. 4 can be omitted by infiltrating the inter-electrode separator with electrolytic solution 16 in advance. In this case, in the thermocompression bonding step illustrated in (C) of Fig. 3, a thermocompression bonding treatment is performed on the entire periphery of each container 12 to form sealing part 14.

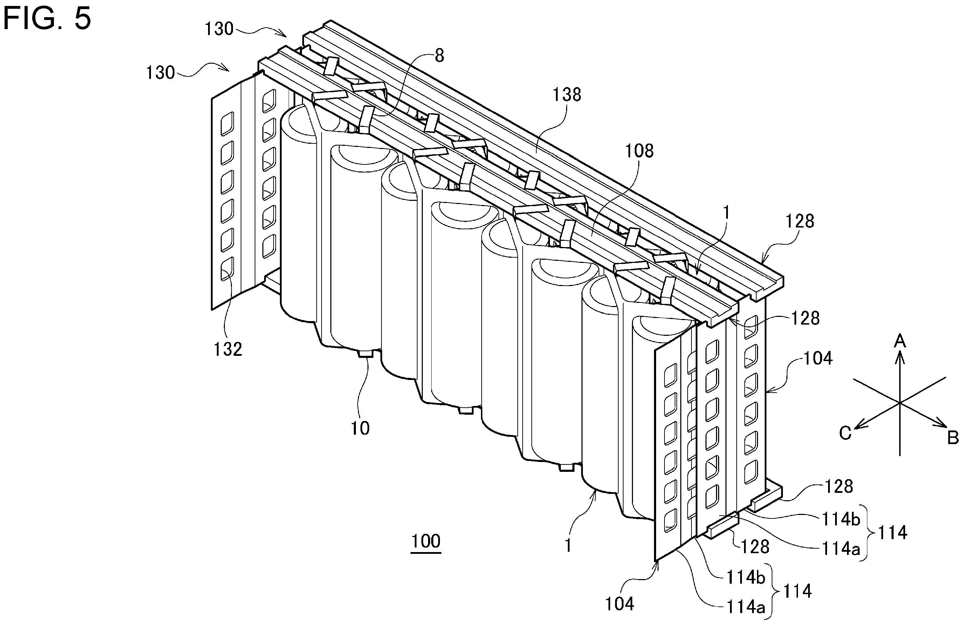

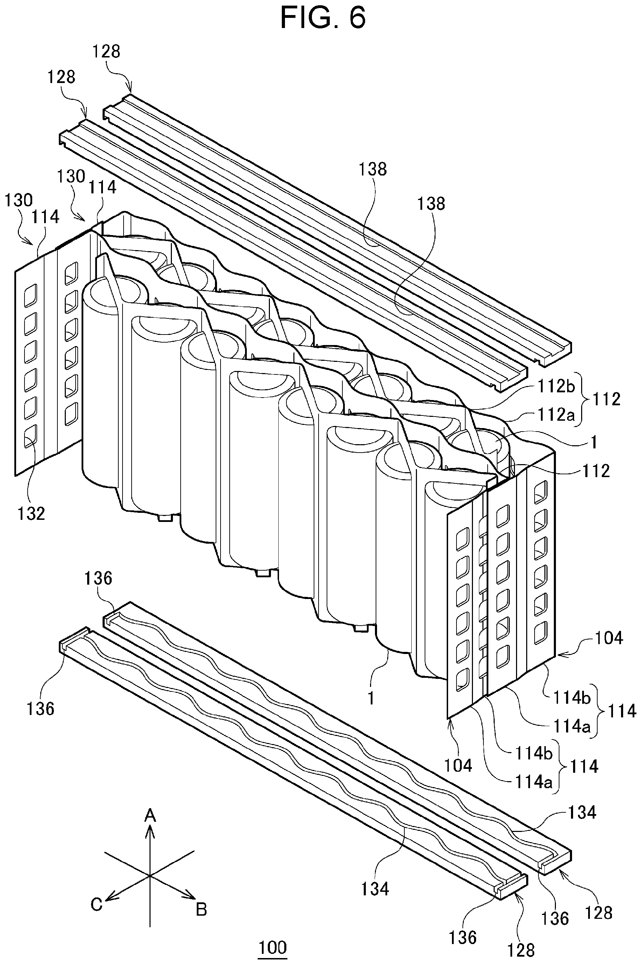

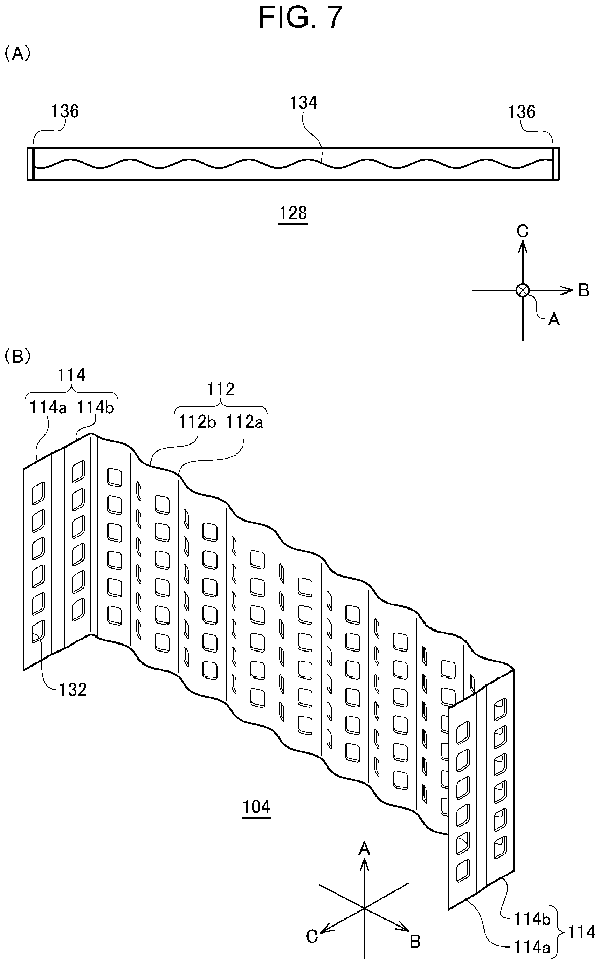

Electric power storage device 1 is incorporated in electric power storage module 100 according to the present exemplary embodiment to be described below. Fig. 5 is a perspective view of electric power storage module 100 according to the exemplary embodiment. Fig. 6 is an exploded perspective view of electric power storage module 100. (A) of Fig. 7 is a plan view of reinforcing member 128, and (B) of Fig. 7 is a perspective view of holder 104.

Electric power storage module 100 includes electric power storage devices 1, holders 104, reinforcing members 128, and bus bars 108 (current collector plates). Electric power storage module 100 of the present exemplary embodiment includes a plurality of electric power storage devices 1. As an example, one electric power storage device 1, one holder 104, and two reinforcing members 128 are combined to form one device unit 130, and electric power storage module 100 includes two device units 130. The number of device units 130 provided in electric power storage module 100 is not particularly limited, and may be one or three or more. In device unit 130, a plurality of electric power storage devices 1 may be assembled to one holder 104. One or three or more reinforcing members 128 may be assembled to one holder 104.

Device units 130 are arrayed in second direction C. A direction of the axis of each device unit 130 is determined such that containers 12 of electric power storage device 1 are arranged in the same direction. Two electric power storage devices 1 adjacent to each other in second direction C are disposed to be shifted from each other in first array direction B such that an axis of electrode assembly 2 of another electric power storage device 1 is positioned between axes of two adjacent electrode assemblies 2 in one electric power storage device 1. That is, container 12 of another electric power storage device 1 is fitted between valleys of two containers 12 of one electric power storage device 1. Accordingly, a dimension of electric power storage module 100 in second direction C can be reduced.

In each device unit 130, electric power storage device 1 is held by holder 104. Holder 104 includes side plate 112 and a pair of projections 114. Side plate 112 is a rectangular plate extending in first direction B. The pair of projections 114 are rectangular plates projecting from both ends of side plate 112 in first direction B in a direction intersecting first direction B and axial direction A. Projections 114 of the present exemplary embodiment project in second direction C. The pair of projections 114 faces each other in first direction B. Accordingly, holder 104 has a substantially U-shape that is long in first direction B. A direction of the axis of holder 104 is determined such that a main surface of side plate 112 directs in second direction C and a main surface of each projection 114 directs in first direction B.

Holder 104 is formed of, for example, one plate. Side plate 112 and the pair of projections 114 can be formed by bending both ends of a metal sheet. Holder 104 may be made of a resin as long as predetermined or higher rigidity is obtained. Side plate 112 and projections 114 that are separated from each other may be joined to form holder 104. Examples of the metal used for each holder 104 include aluminum, an aluminum alloy, and steel. Examples of the resin used for holder 104 include thermoplastic resins such as polypropylene (PP), polybutylene terephthalate (PBT), polycarbonate (PC), and Noryl (registered trademark) resin (modified PPE); fiber-reinforced plastics (FRP) including carbon fiber-reinforced plastics, glass fiber-reinforced plastics, and the like.

Electric power storage device 1 is surrounded by holder 104 on three sides in first direction B and second direction C. Side plate 112 covers one surface of electric power storage device 1 in second direction C. The pair of projections 114 covers both surfaces of electric power storage device 1 in first direction B. As an example, side plate 112 is fixed to facing electric power storage device 1 with an adhesive. The adhesive is preferably an adhesive having an insulating property. An insulating sheet may be interposed between electric power storage device 1 and holder 104.

Electric power storage devices 1 are arrayed in second direction C in a state where holder 104 is assembled. At this time, electric power storage devices 1 are disposed such that exposed surfaces that are not covered with holder 104 face in the same direction. In a state where electric power storage devices 1 are arrayed, the exposed surfaces of electric power storage devices 1 are covered with side plate 112 of adjacent device unit 130 and are fixed with an adhesive. Accordingly, at least a part of electric power storage device 1 is sandwiched between two side plates 112. At least a part of side plate 112 is sandwiched between two electric power storage devices 1.

Each projection 114 includes distal end 114a and base end 114b. Base end 114b is interposed between side plate 112 and distal end 114a. Distal end 114a is shifted in a direction separated from electric power storage device 1 with respect to base end 114b. Accordingly, a distance between the pair of projections 114 is wider near distal end 114a than near base end 114b. Each distal end 114a projects toward a position overlapping base end 114b of adjacent holder 104 as viewed in first direction B.

That is, when the plurality of device units 130 are arrayed in second direction C, in two adjacent holders 104, side plate 112 and the pair of base ends 114b in another holder 104 enter between the pair of distal ends 114a in one holder 104. A known joining treatment such as laser welding is performed on a part where distal end 114a of one holder 104 and base end 114b of another holder 104 overlap each other. As a result, holders 104 are connected to integrate the plurality of device units 130.

Side plate 112 includes a plurality of recesses 112a arranged in first direction B. Each recess 112a has a groove shape extending in axial direction A. In a state where holder 104 is assembled to electric power storage device 1, each container 12 of electric power storage device 1 facing side plate 112 is fitted into each recess 112a. As a result, side plate 112 extends along a curved surface of each container 12. Accordingly, electric power storage device 1 can be more stably held. In particular, displacement of electric power storage device 1 in first direction B can be regulated.

Side plate 112 of the present exemplary embodiment has a corrugated plate shape in which irregularities are repeated in first direction B. That is, as viewed from one main surface, the plurality of recesses 112a and a plurality of protrusions 112b are alternately arranged in first direction B. Thus, containers 12 of electric power storage devices 1 arranged on both sides with side plate 112 interposed therebetween can be fitted into side plate 112. Specifically, for recesses 112a and protrusions 112b when side plate 112 is viewed from one main surface, containers 12 of one electric power storage device 1 are fitted into recesses 112a. Containers 12 of another electric power storage device 1 are fitted to protrusions 112b (which are recesses as viewed from an opposite side) from a back surface. Accordingly, the stability of each electric power storage device 1 in electric power storage module 100 can be further enhanced. Side plate 112 may be a plate having a thickness larger than a thickness of the corrugated plate and provided with a plurality of recesses arranged in first direction B on both surfaces.

Device unit 130 is positioned at one end in second direction C, but another device unit 130 is not present on the exposed surface side. Thus, an end holder (not illustrated) is assembled to the exposed surface of electric power storage device 1 in device unit 130. The end holder as an example has the same shape as holder 104 except that a projecting direction of projection 114 is opposite to holder 104 and projection 114 does not include distal end 114a.

A plurality of through-holes 132 are provided in side plate 112 and the pair of projections 114 of the present exemplary embodiment. The plurality of through-holes 132 provided in side plate 112 penetrate side plate 112 in a plate thickness of side plate 112. The plurality of through-holes 132 are arrayed in a matrix. Similarly, the plurality of through-holes 132 provided in each projection 114 penetrate projection 114 in a plate thickness of projection 114. The plurality of through-holes 132 are arrayed in a matrix. A weight of electric power storage module 100 can be reduced by providing through-holes 132.

Reinforcing member 128 is a member that is fitted to holder 104 to increase the rigidity of holder 104. Reinforcing members 128 are arranged together with holder 104 in axial direction A. In the present exemplary embodiment, reinforcing members 128 are disposed on both sides of holder 104 in axial direction A. Accordingly, holder 104 is sandwiched in axial direction A by the pair of reinforcing members 128.

Each reinforcing members 128 has a flat rod shape that is long in first direction B, and is disposed such that two main surfaces direct in axial direction A. Accordingly, one main surface faces holder 104. Reinforcing member 128 includes first groove 134 in which side plate 112 is fitted on the main surface facing holder 104. An edge of side plate 112 in axial direction Ais fitted into first groove 134. Since side plate 112 of the present exemplary embodiment is a corrugated plate, first groove 134 has a corrugated shape.

Reinforcing member 128 of the present exemplary embodiment includes second grooves 136 into which the pair of projections 114 is fitted on the main surface facing holder 104. Reinforcing member 128 may not include second grooves 136. Edges of projections 114 in axial direction A are fitted into second grooves 136. Second grooves 136 extend in second direction C from both ends of first groove 134 in first direction B. Two projections 114 are fitted into some of second grooves 136. Specifically, in two holders 104 adjacent to each other in second direction C, distal end 114a of one holder 104 and base end 114b of another holder 104 are fitted.

First groove 134 and second grooves 136 of the present exemplary embodiment are connected to each other. As an example, second grooves 136 are connected to the ends of first groove 134 in first direction B. With this configuration, a corner that is a connecting part between side plate 112 and projection 114 in holder 104 can be contained in the groove. As a result, holder 104 can be held more firmly. Second grooves 136 may not be connected to first groove 134.

Each projection 114 of the present exemplary embodiment has a uniform dimension in axial direction A, but is not limited to this configuration. For example, both ends or one end of distal end 114a of each projection 114 in axial direction A may be cut out. With this configuration, projection 114 fitted into second groove 136 can be limited to only the projection of holder 104 in which side plate 112 is fitted into first groove 134 of reinforcing member 128 in which second grooves 136 are provided. That is, one projection 114 is fitted into any of second grooves 136. Accordingly, regardless of a position of holder 104 with respect to electric power storage module 100, that is, regardless of holder 104 disposed at an end in second direction C or holder 104 disposed closer to a center in second direction C, a shape of a groove provided in holder 104 can be uniform. A dimension of distal end 114a in axial direction A in which an end in axial direction A is cut out is, for example, equal to a distance between two reinforcing members 128 sandwiching holder 104 in axial direction A.

Reinforcing member 128 has an insulating property and has mounting part 138 for bus bar 108. That is, reinforcing member 128 also serves as an insulating plate that supports bus bar 108. Mounting part 138 is provided on a main surface of reinforcing member 128 facing opposite to holder 104. Mounting part 138 is, for example, a recess formed on the main surface and adapted to a shape of bus bar 108. As an example, a depth of mounting part 138 is larger than a thickness of bus bar 108. With this configuration, when electric power storage module 100 abuts onto surrounding members, it is possible to suppress bus bar 108 from abutting onto the surrounding members. The thickness of bus bar 108 may be larger than the depth of mounting part 138. In this case, a part of bus bar 108 projecting from mounting part 138 may be covered with an insulating cap (not illustrated). Reinforcing member 128 is made of, for example, a resin having an insulating property. Examples of the resin forming reinforcing member 128 include a thermoplastic resin such as polypropylene (PP), polybutylene terephthalate (PBT), polycarbonate (PC), or Noryl (registered trademark) resin (modified PPE); and a carbon fiber reinforced plastic (CFRP).

In a state where electric power storage devices 1 held by holders 104 are arrayed in second direction C and adjacent holders 104 are connected to each other, reinforcing members 128 are fitted into both sides of each holder 104 in axial direction A. Bus bar 108 is mounted on at least a part of mounting part 138. Bus bar 108 is a strip-shaped conducting member extending in first direction B, and first electrode lead 8 and second electrode lead 10 of each electric power storage device 1 are electrically connected to bus bar 108. Accordingly, the plurality of electrode assemblies 2 are electrically connected to each other. For example, each electrode lead is joined to bus bar 108 by a known joining treatment such as laser welding. By interposing reinforcing member 128 between electric power storage device 1 and bus bar 108, it is possible to suppress electrical connection between each electric power storage device 1 and bus bar 108 at a part other than the electrode leads.

In the present exemplary embodiment, in each electric power storage device 1, the plurality of first electrode leads 8 project toward the same side. The directions of the axes of two adjacent electric power storage devices 1 are set such that first electrode leads 8 project toward the same side. Thus, when the electrode leads are joined to bus bar 108, all electrode assemblies 2 are connected in parallel to each other. An aspect of electrical connection between electrode assemblies 2 is not particularly limited. For example, in each electric power storage device 1, first electrode lead 8 and second electrode lead 10 may be alternately arranged, and first electrode lead 8 and second electrode lead 10 adjacent to each other may be electrically connected. That is, in each electric power storage device 1, the plurality of electrode assemblies 2 may be connected in series. Two adjacent electric power storage devices 1 may be connected in series. All electrode assemblies 2 mounted on electric power storage module 100 may be connected in series.

First electrode lead 8 and second electrode lead 10 may project toward the same side in axial direction A. Accordingly, electrode assemblies 2 can be electrically connected to each other only by disposing bus bars 108 on one side of electric power storage module 100. Therefore, person-hours for assembling electric power storage module 100 can be reduced.

As described above, electric power storage module 100 according to the present exemplary embodiment includes electric power storage devices 1, holders 104 that hold electric power storage devices 1, and reinforcing members 128 of holders 104. Electric power storage device 1 includes the plurality of cylindrical electrode assemblies 2, and film outer covering body 4 that includes the plurality of containers 12 that individually wrap the plurality of electrode assemblies 2 and sealing part 14 that seal containers 12 and connect the plurality of containers 12 to each other. Holder 104 is side plate 112 extending in the array direction (first direction B) of the plurality of electrode assemblies 2, and includes side plate 112 having the plurality of recesses 112a arrayed in first direction B and into which containers 12 are fitted. Reinforcing member 128 includes first groove 134 that extends in first direction B, is arranged together with holder 104 in axial direction A of electrode assembly 2, and includes surface facing holder 104 and into which side plate 112 is fitted.

Electric power storage device 1 is long in first direction B, and film outer covering body 4 has high flexibility. Thus, when electric power storage device 1 receives an impact or the like from the outside, a center in first direction B is easily bent to project in second direction C with respect to both ends. Since electric power storage device 1 is long in first direction B, side plate 112 is also long in first direction B. From the viewpoint of the weight reduction of electric power storage module 100 and the like, the thickness of holder 104 is required to be as thin as possible. Accordingly, it is difficult to provide rigidity enough to sufficiently suppress the bending of electric power storage device 1 described above to holder 104.

By contrast, the rigidity of holder 104 against the above-described bending can be enhanced by fitting reinforcing member 128 into the end of side plate 112. Therefore, the holding strength of electric power storage device 1 can be enhanced. Stress generated in holder 104 can be effectively reduced, and the rigidity of electric power storage module 100 can be enhanced.

The inventor of the present invention has confirmed that an increase in weight of electric power storage module 100 is suppressed in a case where the holding strength of the electric power storage device is enhanced by reinforcing member 128 as compared with a case where the holding strength of electric power storage device 1 is enhanced by increasing the thickness of holder 104. That is, the rigidity of holder 104 is enhanced by reinforcing member 128, and thus, the increase in weight of electric power storage module 100 can be suppressed as compared with a case where similar rigidity is acquired by increasing the thickness of holder 104.

Side plate 112 of the present exemplary embodiment includes the plurality of recesses 112a, and each container 12 is fitted into each recess 112a. Accordingly, electric power storage device 1 can be more stably held. Accordingly, the electrical connection state between each electric power storage device 1 and bus bar 108 can be more stably held, and the breakage and the like of each electric power storage device 1 can be further suppressed. Therefore, power generation performance and safety performance of electric power storage module 100 can be enhanced. Since a pouch structure in which the plurality of electrode assemblies 2 are sealed with film outer covering body 4 is adopted, the weight of electric power storage module 100 can be reduced as compared with a case where electrode assemblies 2 are individually sealed with the outer covering can.

Holder 104 according to the present exemplary embodiment includes the pair of projections 114 projecting from both ends of side plate 112 in first direction B in a direction intersecting the array direction and axial direction A. Reinforcing member 128 includes second grooves 136 in which the pair of projections 114 is fitted on the surface facing holder 104. Accordingly, three sides on the same surface of holder 104 can be fixed by reinforcing members 128. Therefore, the rigidity of holder 104 can be further enhanced, and the holding strength of electric power storage device 1 can be further enhanced. Reinforcing members 128 of the present exemplary embodiment are disposed on both sides of holder 104 in axial direction A. Accordingly, the holding strength of electric power storage device 1 can be further enhanced.

First groove 134 and second grooves 136 of the present exemplary embodiment are connected to each other. With this configuration, a corner that is a connecting part between side plate 112 and projection 114 in holder 104 can be contained in the groove. Therefore, holder 104 can be held more firmly.

Reinforcing member 128 of the present exemplary embodiment has an insulating property, and includes mounting part 138 of bus bar 108 that electrically connects the plurality of electrode assemblies 2. Accordingly, the reinforcement of holder 104 and the insulation of bus bar 108 can be realized by one member. Therefore, it is possible to suppress an increase in the number of components of electric power storage module 100 by providing reinforcing member 128.

Electric power storage module 100 of the present exemplary embodiment includes a plurality of electric power storage devices 1. Side plate 112 has a corrugated plate shape in which irregularities are repeated in first direction B and is sandwiched between two electric power storage devices 1, and each container 12 of one electric power storage device 1 is fitted into each recess 112a as viewed from one main surface, and each container 12 of another electric power storage device 1 is fitted into each protrusion 112b as viewed from the main surface from the back surface. Accordingly, the stability of each electric power storage device 1 in electric power storage module 100 can be further enhanced.

Film outer covering body 4 of the present exemplary embodiment extends in a zigzag manner while being refracted or curved between adjacent containers 12. Accordingly, the length of electric power storage device 1 can be shortened as compared with the case where film outer covering body 4 is not folded without reducing the size of sealing part 14. As a result, the number of electrode assemblies 2 mounted on electric power storage module 100 can be increased, and electric power storage module 100 can be downsized without reducing the number of electrode assemblies 2 mounted on the electric power storage module. That is, according to the present exemplary embodiment, it is possible to improve energy density of electric power storage module 100 while a decrease in sealing property of electrode assembly 2 is suppressed.

The exemplary embodiment of the present disclosure has been described in detail above. The above-described exemplary embodiment is merely a specific example for implementing the present disclosure. The contents of the exemplary embodiment do not limit the technical scope of the present disclosure, and many design changes such as changes, additions, and deletions of constituent elements can be made without departing from the spirit of the invention defined in the claims. Any new exemplary embodiment resulting from a change or modification according to the designed concept offers effects of an exemplary embodiment and a modification that are combined with the new exemplary embodiment. In the above-described exemplary embodiment, what can be changed or modified according to the designed concept is emphasized by such phrases as "of the present exemplary embodiment" and "in the present exemplary embodiment". However, contents not expressed by such phrases may also be changed or modified according to the designed concept. Further, any combination of constituent elements included in each exemplary embodiment is also effective as an aspect of the present disclosure. Hatching applied to the cross section in the drawing does not limit the material of the object to which the hatching has been applied.

### (Modified example)

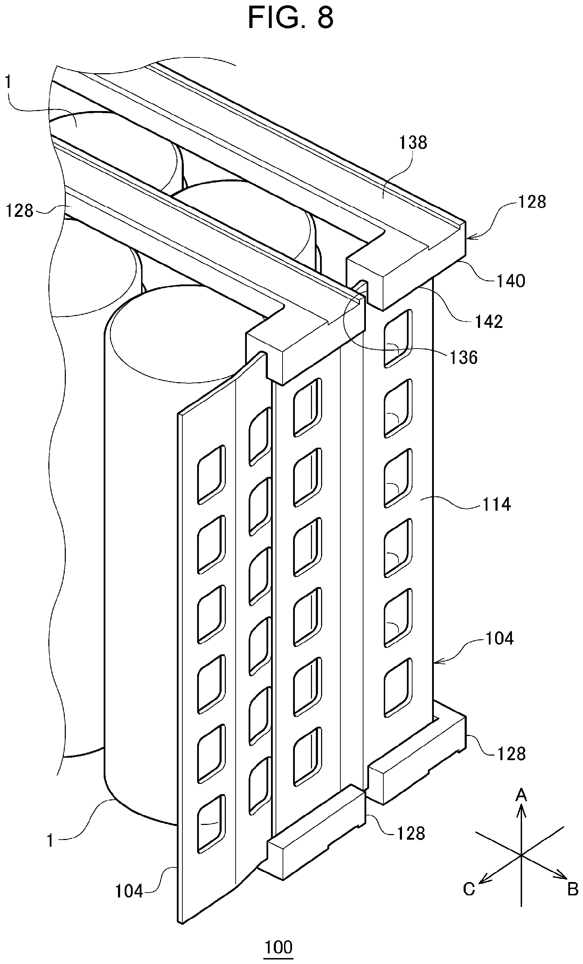

The present modified example has a configuration common to the configuration of the exemplary embodiment except for the shape of reinforcing member 128. Hereinafter, the present modified example will be described focusing on a configuration different from the exemplary embodiment, and description of common configurations will be omitted. Fig. 8 is a perspective view of a part of electric power storage module 100 according to the modified example. Note that, the illustration of electric power storage devices 1 is simplified in Fig. 8. The illustration of bus bar 108 is omitted.

As illustrated in Fig. 8, reinforcing member 128 provided in electric power storage module 100 according to the modified example includes body 140 and a pair of arms 142. Body 140 corresponds to reinforcing member 128 in the exemplary embodiment, has a flat rod shape, and extends in first direction B at a position overlapping side plate 112 in axial direction A. First groove 134 and second grooves 136 are provided on a surface facing holder 104.

The pair of arms 142 projects in second direction C from both ends of body 140 in first direction B and overlaps projections 114 in axial direction A. Accordingly, reinforcing member 128 has a substantially U-shape that is long in first direction B as viewed in axial direction A. Each second groove 136 extends from body 140 to a distal end of each arm 142. Accordingly, a contact area between second groove 136 and projection 114 can be increased. As a result, since the rigidity of holder 104 can be further enhanced, the holding strength of electric power storage device 1 can be further enhanced.

### REFERENCE MARKS IN THE DRAWINGS

- 1: electric power storage device
- 2: electrode assembly
- 4: film outer covering body
- 12: container
- 14: sealing part
- 100: electric power storage module
- 104: holder
- 108: bus bar
- 112: side plate
- 112a: recess
- 112b: protrusion
- 114: projection
- 128: reinforcing member
- 134: first groove
- 136: second groove
- 138: mounting part

## Claims

1. An electric power storage module comprising:
an electric power storage device;
a holder that holds the electric power storage device; and
a reinforcing member of the holder, wherein
the electric power storage device includes
a plurality of electrode assemblies each being cylindrical, and
a film outer covering body that includes (i) a plurality of containers that individually wrap the plurality of electrode assemblies and (ii) a sealing part that seals the plurality of containers and connects the plurality of containers to each other,
the holder includes a side plate that is in an array direction of the plurality of electrode assemblies, the side plate including a plurality of recesses that are arrayed in the array direction and into which the plurality of containers are fitted, and
the reinforcing member includes a first groove, the first groove being elongated in the array direction, being arranged together with the holder in an axial direction of the plurality of electrode assemblies, and including a surface facing the holder, the side plate being fitted on the surface.

2. The electric power storage module according to Claim 1, wherein
the holder includes a pair of projections that projects in a direction intersecting the array direction and the axial direction from both ends of the side plate in the array direction, and
the reinforcing member includes second grooves the pair of projections being fitted on the surface facing the holder.

3. The electric power storage module according to Claim 2, wherein the first groove and the second grooves are connected to each other.

4. The electric power storage module according to any one of Claims 1 to 3, wherein the reinforcing member is disposed both sides of the holder in the axial direction.

5. The electric power storage module according to any one of Claims 1 to 4, wherein the reinforcing member is provided with an insulating property, and includes a mounting part of a bus bar electrically connecting the plurality of electrode assemblies.

6. The electric power storage module according to any one of Claims 1 to 5, wherein
the electric power storage module includes a plurality of electric power storage devices each being the electric power storage device,
the side plate is in a corrugated plate state in which irregularities are repeated in the array direction, and is sandwiched between two electric power storage devices, and
each of the plurality of containers of one electric power storage device is fitted into each of the recesses as viewed from one main surface, and each of the plurality of containers of another electric power storage device is fitted into each of the projections as viewed from the one main surface from a back side.

7. The electric power storage module according to any one of Claims 1 to 6, wherein the film outer covering body is elongated in a zigzag manner while being refracted or curved between adjacent containers.
